# EUROPEAN PATENT APPLICATION

(11) **EP 4 027 500 A1**
(43) Date of publication of application: **13.07.2022**
(21) Application number: 21151077.1
(22) Date of filing: 12.01.2021
(51) Int. Cl.: H02K 9/06, F16C 39/04, H02K 7/04, H02K 15/16, H02K 7/08

(54) **AN ELECTRIC MACHINE**

(71) Applicant: ABB Schweiz AG, 5400 Baden (CH)
(72) Inventor: Holopainen, Timo, 00380 Helsinki (FI); Ikonen, Janne, 00380 Helsinki (FI)
(74) Representative: Kolster Oy Ab

(57) **Abstract**

The electric machine comprises a shaft (12), a rotor, a stator, a frame, and two end plates (335). The shaft is supported with bearings (30) on the end plates. At least one fan (50) is positioned at the non-drive end. Two circular suction plates (410, 420) with an outer diameter (D1) and a mutual axial distance (L1) are arranged around the shaft outside the frame at the non-drive end of the electric machine. A first suction plate facing towards the drive end is fixed and a second suction plate facing towards the non-drive end rotates with the shaft. The outer diameter and the mutual axial distance of the two suction plates is determined so that an axial force produced by the suction between the two suction plates compensates the axial force produced by the at least one fan.

## Description

### FIELD

The present invention relates to an electric machine.

### BACKGROUND

An electric machine may be provided with a rotor, a stator surrounding the rotor, and a frame surrounding the stator. Small electric machines may often be provided with an open air-circulation through the electric machine. A fan may be positioned on a shaft of the rotor and said fan may blow air through the electric machine.

Medium sized electric machines may often be provided with a closed internal air-circulation within the electric machine. Air may be circulated within the electric machine between the rotor and the stator in a closed loop. The rotor and the stator may be provided with axial air channels through which the closed air circulation is arranged. There may further be air chambers at both ends of the electric machine providing a flow connection between the axial channels in the rotor and the stator. A first fan may be provided for circulating the internal air. The outer surface of the frame may be provided with cooling fins in order to increase the area of the frame that can transfer heat from the frame to the surrounding air. The electric machine may further be provided with a third air chamber positioned axially outside one of the two air chambers. The third air chamber may be provided with a second fan. The second fan may suck cooling air from an outside of the electric machine and blow the cooling air axially along cooling fins on the outer surface of the frame.

The rotor of the electric machine may be aligned axially by the electromagnetic centring force. This force is produced by the end effects or radial air ducts of the active parts. This centre position of the rotor is disturbed by the axial aerodynamic force exerted by the first fan and the second fan. Both fans pull the rotor towards the non-drive end of the electric machine. The electromagnetic force is roughly proportional to the axial displacement and the flux density. The aerodynamic total force is proportional to the second power of the rotor speed. This means that the rotor tends to be located out of the geometrical axial centre position. This is especially the case in two-pole electric machines. The pressures and the axial forces caused by the fans are big due to the big rotational speed in a two-pole electric machine. The magnetic force aligning the rotor axially is typically also smaller in a two-pole electric machine compared to a multi-pole electric machine. The rotor may in the worst case touch the axial surface of the locating bearing. The magnetic centre of the electric machine should stay within a range corresponding to 20% of the total end-play available. This means that the magnetic centre should stay within a range of ±1.6 mm from the mechanical centre of the electric machine.

There is thus a need to be able to ensure that the rotor stays within said range. One prior art solution to the problem has been to provide the outer surface of the rotor with radial grooves at an axial distance from each other and the inner surface of the stator core with corresponding radial grooves. The additional grooves aim at increasing the electromagnetic centring force. This is, however, not an optimal solution to the problem. It is expensive to produce the additional radial grooves and they may slightly reduce the performance of the electric machine.

### SUMMARY

An object of the present invention is to achieve an improved electric machine.

The electric machine according to the invention is defined in claim 1.

The electric machine comprises
a shaft,
a rotor being supported on the shaft,
a stator surrounding the rotor,
a frame surrounding the stator,
end plates being attached to opposite axial ends of the frame, the shaft being supported with a first bearing on a first end plate at a drive end of the electric machine and with a second bearing on a second end plate at a non-drive end of the electric machine,
at least one fan being supported on the shaft at the non-drive end of the electric machine.

The electric machine is characterized in that
two circular suction plates with an outer diameter and a mutual axial distance are arranged around the shaft outside the frame, a first suction plate facing towards the drive end is fixed and a second suction plate facing towards the non-drive end rotates with the shaft, the outer diameter and the mutual axial distance of the two suction plates being determined so that an axial force produced by the suction between the two suction plates on the shaft compensates the axial force produced by the at least one fan on the shaft.

A suction is produced between the stationary and the rotating suction plate. This suction will cause the rotating suction plate to be drawn towards the stationary suction plate. This force acting on the rotor in a direction from the non-drive end towards the drive end will counteract the force caused by the at least one fan acting on the rotor in a direction from the drive end towards the non-drive end.

The invention provides a relatively cheap and effective way of dealing with the centring problem of the rotor.

The electric machine can be an electric motor or an electric generator.

The electric machine may be a medium sized electric machine. The shaft height of the electric machine may be in the range of 315 to 500 mm. The electric machine may be a high voltage electric machine. The electric machine may be a rib cooled electric machine. The output power of the electric machine may be in the range of 100 to 1800 kW. The voltage of the electric machine may be up to 11.5 kV.

### DRAWINGS

In the following the invention will be described in greater detail by means of preferred embodiments with reference to the attached drawings, in which
Figure 1 shows an axial cross section of an electric machine,
Figure 2 shows the principle of the invention,
Figure 3 shows a first embodiment of the invention,
Figure 4 shows a second embodiment of the invention,
Figure 5 shows a third embodiment of the invention.

### DETAILED DESCRIPTION

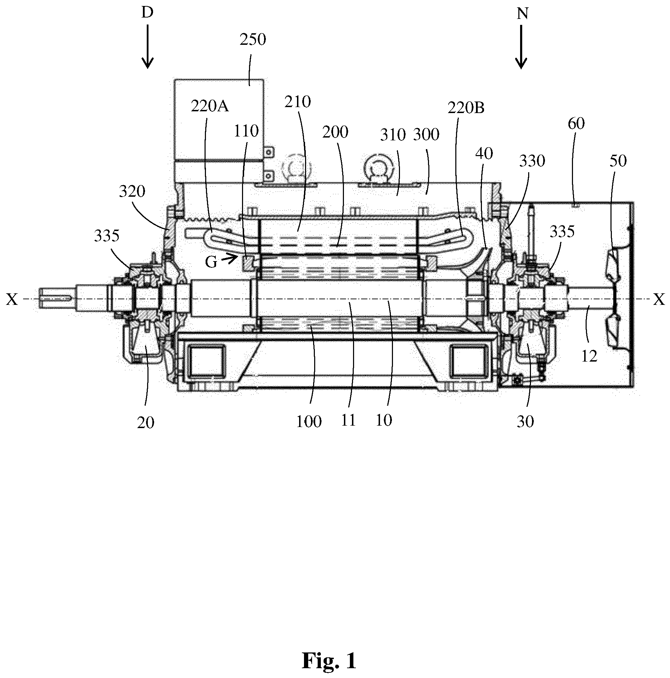

Figure 1 shows an axial cross section of an electric machine.

The electric machine may comprise a shaft 10, a rotor 100, a stator 200, and a frame 300.

The shaft 10 may be rotatably supported on radial bearings 20, 30 at both ends of the electric machine. The radial bearings 20, 30 may be positioned in bearing nests 325, 335 arranged in end plates 320, 330. A first one 325 of the two end plates 320, 330 may be attached to a first axial end of the frame 300 at the drive end D of the electric machine. A second one 335 of the two end plates 325, 335 may be attached to a second axial end of the frame 300 at the non-drive end N of the electric machine. The first axial end of the frame 300 is opposite to the second axial end of the frame 300. The shaft 10 may rotate around an axis X-X of rotation. The drive end D of the electric machine is to the left in the figure and the non-drive end N of the electric machine is to the right in the figure.

The rotor 100 may be fitted on a middle portion 11 of the shaft 10 so that the rotor 100 rotates in synchronism with the shaft 10. The rotor 100 may comprise a rotor winding 110. The rotor 100 may be cylindrical.

The stator 200 may surround the rotor 100. The stator 200 may be attached to the frame 300. The frame 300 may surround the stator 200. The stator 200 and the frame 300 are both stationary.

The stator 200 may comprise a stator core 210 and a stator winding 220. The stator winding 220 may be positioned in axial grooves arranged on an inner surface of the stator core 210. The stator winding 220 may further comprise end portions 220A, 220B extending outwards from opposite axial ends of the stator core 210. The stator 200 may be cylindrical.

There is an air gap G between the inner perimeter of the stator core 210 and the outer perimeter of the rotor 100.

The frame 300 may surround the stator 200. The frame 300 may have a generally cylindrical shape.

A first fan 40 may be positioned within the frame 300 of the electric machine. The first fan 40 may be positioned at the non-drive end N of the electric machine. The first fan 40 may be positioned adjacent to the second end plate 330. The first fan 40 may be fitted on the shaft 10 so that the first fan 40 rotates with the shaft 10. The first fan 40 may be formed of fan blades fitted on the shaft 10.

A second fan 50 may be positioned outside the frame 300 at the non-drive end N of the electric machine. The second fan 50 may be positioned outside the second end plate 330. The second fan 50 may be fitted on an end portion 12 of the shaft 10 so that the second fan 50 rotates with the shaft 10. The second fan 40 may be formed of a blade wheel fitted on the end portion 12 of the shaft 10. The second fan 50 may be positioned in an enclosure 60 extending between the second end plate 330 and the second fan 50.

A terminal box 250 of the electric machine may be positioned on an upper portion of the frame 300 of the electric machine. The electric cables connecting the electric machine to an outside electric network are connected into the terminal box 250.

An axial air passage may be formed between the outer perimeter of the rotor 100 and the inner perimeter of the stator 200. Further axial air channels may be provided on the rotor 100 and in the stator 200. The rotor 100 and the stator core 210 may have a laminated structure formed of a pack of sheets.

The first fan 40 may circulate air within the electric machine. The first fan 40 may circulate air between the drive end D and the non-drive end N of the electric machine. The air may be circulated through the axial air channels in the rotor 100 and the stator 200 of the electric machine. Air may also pass through the air gap G between the rotor 100 and the stator 200.

The second fan 50 may suck cooling air from the outside of the electric machine and blow the cooling air axially from the non-drive end N to the drive end D along cooling ribs on the outer surface of the frame 300 of the electric machine.

The rotor 100 may be aligned axially by the electromagnetic centring force. This electromagnetic force is produced by the end effects or radial air ducts of the active parts. This centre position is disturbed by the axial aerodynamic force exerted by the first fan 40 and the second fan 50. Both fans 40, 50 pull the rotor 100 towards the non-drive end N of the electric machine. The electromagnetic force is roughly proportional to the axial displacement and the flux density. The aerodynamic total force is proportional to the second power of the rotor speed. This means that the rotor 100 tends to be located out of the geometrical centre position. This is especially the case in two-pole machines. The pressures and the axial forces caused by the fans are big due to the big rotational speed in a two-pole electric machine. The magnetic force aligning the rotor axially is typically also smaller in a two-pole electric machine compared to a multi-pole electric machine. The rotor 100 may in the worst case touch the axial surface of the locating bearing. The magnetic centre of the electric machine should stay within a range of 20% of the total end-play available. This means that the magnetic centre should stay within a range of ±1.6 mm from the mechanical centre of the electric machine.

The axial play of the rotor 100 may be ±8 mm. The play may be limited by the surfaces in the radial bearing 20 at the drive end D of the electric machine. These surfaces are, however, not intended for continuous operation. The first fan 40 and the second fan 50 generate axial forces in the same direction towards the non-drive end N of the electric machine. These forces are proportional to the second power of the rotational speed of the fans 40, 50 i.e. the rotational speed of the shaft 10 and the rotor 100. The axial force generated by the second fan 50 is normally greater than the axial force generated by the first fan 40.

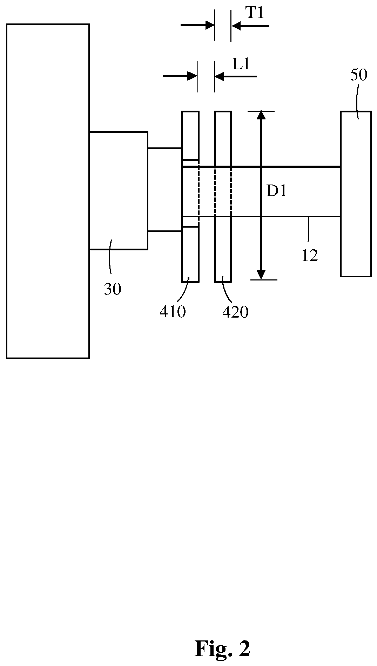

Figure 2 shows the principle of the invention.

The solution to the problem relating to the axial alignment of the rotor 100 is to use suction plates 410, 420 on the shaft 12 of the electric machine. The suction plates 410, 420 may be positioned in the non-drive end N of the electric machine in the space between the second radial bearing 30 and the second fan 50. The suction plates 410, 420 may be formed of two circular plates 410, 420 positioned at an axial distance L1 from each other. The first suction plate 410 may be fixed and the second suction plate 420 may be rotating. The first suction plate 410 may be attached to some non-rotating part in the frame 300 of the electric machine e.g. to the bearing 30. The second suction plate 420 may be attached to a part rotating with the shaft 10 or directly to the shaft 10. The second plate 420 may be attached to the outer portion 12 of the shaft 10. The first suction plate 410 is facing towards the drive end D and the second suction plate 420 is facing towards the non-drive end N of the electric machine.

The suction, i.e. under-pressure, is generated by a static plate 410 and a rotating plate 420 with a narrow space L1 between them. The suction plates 410, 420 are positioned at an axial distance L1 from each other. The suction plates 410, 420 have an outer diameter D1. The suction plates 410, 420 have an axial thickness T1. The axial force produced by the suction between the suction plates 410, 420 may be adjusted by the axial distance L1 and the outer diameter D1 of the suction plates 410, 420. The axial force generated by the suction plates 410, 420 is proportional to the second power of the rotation speed of the rotor 100 in the same way as the axial force generated by the first 40 and the second 50 fan. The force generated by the suction plates 410, 420 may thus be used to counteract the forces caused by the first fan 40 and the second fan 50. Finally, when the total aerodynamic force is small enough, the electromagnetic centering force is strong enough to center the axial location of the rotor 100.

The force generated by the suction plates 410, 420 is directed towards the drive end D of the electric machine. The second rotating suction plate 420 is drawn in the axial direction towards the first fixed suction plate 410. The shaft 10 and thereby also the rotor 100 is thus pushed towards the drive end D of the electric machine.

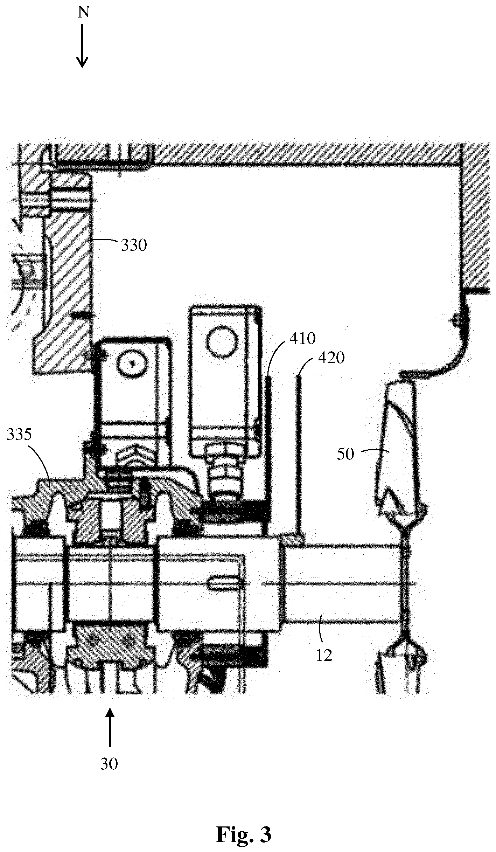

Figure 3 shows a first embodiment of the invention.

The figure shows the non-drive end N of an electric machine in which the radial bearing 30 is positioned centrally in the end plate 330. The end plate 330 has a conical shape.

The first suction plate 410 is attached to the bearing housing 335 i.e. the first suction plate 410 is fixed. The second suction plate 420 is attached to the outer portion 12 of the shaft 10 i.e. the second suction plate 420 is rotating with the shaft 10 and thereby with the rotor 100.

The first suction plate 410 and the second suction plate 420 may be formed of circular planar plates.

The suction plates 410, 420 may be made of a solid material. The outer surfaces of the suction plates 410, 420 may be smooth.

The suction plates 410, 420 may be parallel and positioned at an axial distance from each other. Both suction plates 410, 420 may have the same diameter. Both suction plates 410, 420 may have the same axial thickness. The thickness of the suction plates 410, 420 should be such that the suction plates 410, 420 may withstand the suction forces without bending.

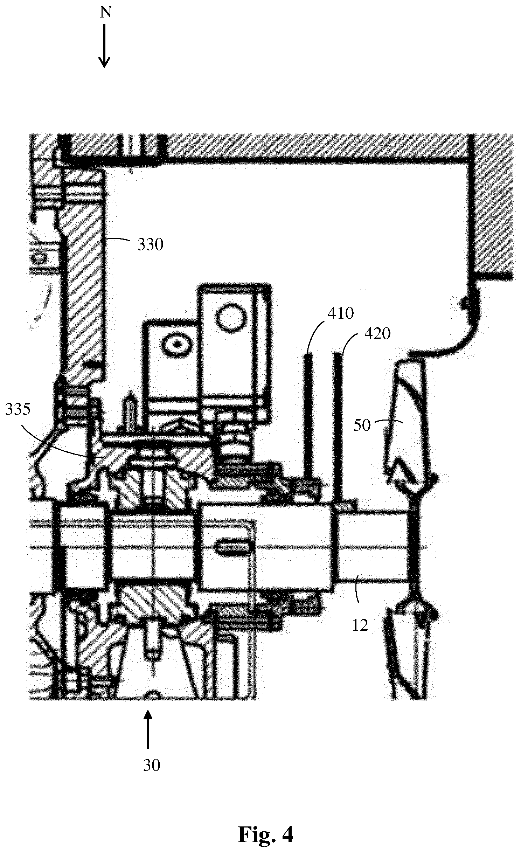

Figure 4 shows a second embodiment of the invention.

The figure shows the non-drive end N of an electric machine in an electric machine in which the radial bearing 30 is positioned to the side of the end plate 330. The end plate 330 has a straight shape.

The first suction plate 410 is attached to the bearing housing 335 i.e. the first suction plate 410 is fixed. The second suction plate 420 is attached to the outer portion 12 of the shaft 10 i.e. the second suction plate 420 is rotating with the shaft 10 and thereby with the rotor 100.

The first suction plate 410 and the second suction plate 420 may be formed of circular planar plates.

The suction plates 410, 420 may be made of a solid material. The outer surfaces of the suction plates 410, 420 may be smooth.

The suction plates 410, 420 may be parallel and positioned at an axial distance from each other. Both suction plates 410, 420 may have the same diameter. Both suction plates 410, 420 may have the same axial thickness. The thickness of the suction plates 410, 420 should be such that the suction plates 410, 420 may withstand the suction forces without bending.

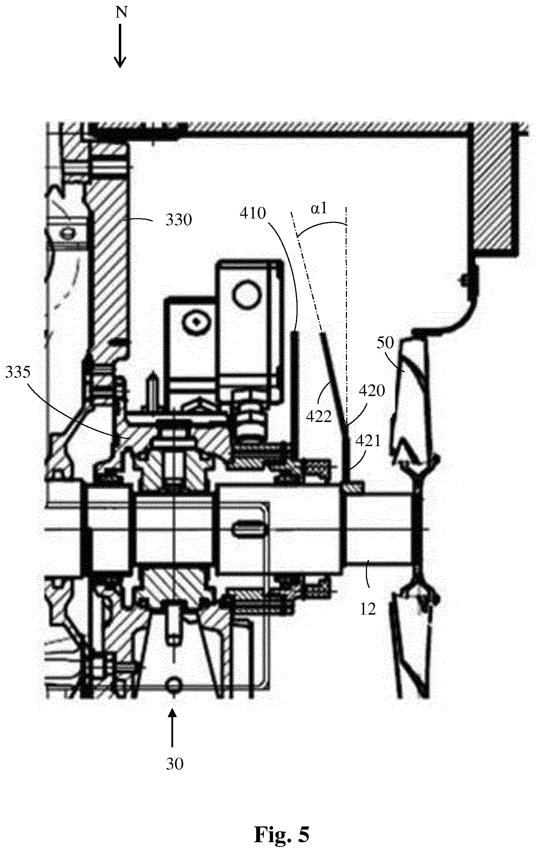

Figure 5 shows a third embodiment of the invention.

The figure shows the non-drive end N of an electric machine. The figure shows the same electric machine as figure 4.

The first suction plate 410 is attached to the bearing housing 335 i.e. the first suction plate 410 is fixed. The second suction plate 420 is attached to the outer portion 12 of the shaft 10 i.e. the second suction plate 420 is rotating with the shaft 10 and thereby with the rotor 100.

The first suction plate 410 may be made of a circular planar plate. The second suction plate 420 may be made of a plate having the form of a truncated cone. The second suction plate 420 may comprise a first, straight portion 421 protruding outwards from the outer portion of the shaft 12 and a second, portion 422 protruding in an inclined a1 manner outwards from the first portion 421. The second portion 422 may have the form of a truncated cone. A first, bigger bottom plane of the truncated cone 422 is positioned closer to the first suction plate 410 compared to a second, smaller bottom plane of the truncated cone 422. The diameter of the first bottom plane of the truncated cone 422 is bigger than the diameter of the second bottom plane of the truncated cone 422. The axis of the truncated cone is parallel with the axis X-X of the shaft 10 of the electric machine. The axial distance L1 between the suction plates 410, 420 may be determined by the axial distance at the outer perimeter of the suction plates 410, 420.

The suction plates 410, 420 may be made of a solid material. The outer surfaces of the suction plates 410, 420 may be smooth.

An axial distance between the first suction plate 410 and the second suction plate 420 is smaller at the first, bigger bottom plane of the truncated cone 422 compared to the axial distance at the second, smaller bottom plane of the truncated cone 422. The first portion 421 of the second suction plate 420 is thus parallel with the first suction plate 410. The second portion 422 of the second suction plate 420 is, however, non-parallel with the first suction plate 410. Both suction plates 410, 420 may have the same outer diameter. Both suction plates 410, 420 may have the same axial thickness. The thickness of the suction plates 410, 420 should be such that the suction plates 410, 420 may withstand the suction forces without bending.

Figures 3-5 shows only the upper portion of the suction plates 410, 420 i.e. the portion positioned above the outer portion 12 of the shaft 10 of the electric machine. The suction plates 410, 420 are symmetrical cylindrical plates provided with an opening in the middle of the suction plate 410, 420. The diameter of the opening in the first suction plate 410 is greater than the outer diameter of the outer portion 12 of the shaft 10 allowing the outer portion 12 of the shaft 10 to rotate freely in relation to the first suction plate 410. The opening in the second suction plate 420 may be provided with a bushing seating tight on the outer diameter of the outer portion 12 of the shaft 10. The second suction plate 420 rotates thus with the outer portion 12 of the shaft 10.

The axial distance L1 between the suction plates 410, 420 as well as the diameter D1 of the suction plates 410, 420 may be determined separately for each specific electric machine. The idea is simply to determine the axial distance L1 and the diameter of the two suction plates 410, 420 so that a suitable suction is developed between the two suction plates 410, 420. The suction between the two suction plates 410, 420 should produce an axial force that is able to compensate for the axial force produced by the at least one fan 40, 50 on the shaft 10. The axial force produced by the suction between the suction plates 410, 420 and the axial force produced by the fan(s) 40, 50 are both proportional to the second power of the rotational speed of the rotor.

The dimensioning of the suction plates 410, 420 in a medium sized electric machine may be as follows. The axial distance L1 between the suction plates 410, 420 may be in the range of 20 to 40 mm, advantageously 30 mm. The outer diameter D1 of the suction plates 410, 420 may be in the range of 400 to 500 mm.

The thickness T1 of the suction plates 410, 420 does not as such have any impact on the suction developed between the suction plates 410, 420. The thickness T1 may be in the range of 2 to 7 mm.

The angle α1 of the cone 422 of the second suction plate 420 in the embodiment in figure 5 may be in the range of 5 to 20 degrees.

The fans 40, 50 may be centrifugal fans. A centrifugal fan moves air or gas in a direction at an angle to the incoming air. Centrifugal fans often contain a ducted housing to direct outgoing air in a specific direction. Centrifugal fans use the kinetic energy of the impellers to increase the volume of the air stream. The air stream moves against the resistance caused by ducts, dampers and other components in the system. Centrifugal fans displace air radially so that the direction of the incoming airflow is changed. The change of direction is typically 90 degrees. Centrifugal fans are constant-displacement or constant-volume devices. This means that, at a constant fan speed, a centrifugal fan moves a relatively constant volume of air rather than a constant mass. The air velocity in the fan is fixed even though the mass flow rate through the fan is not. A centrifugal fan may have a drum shape composed of a number of fan blades mounted around a hub. The hub may turn on a driveshaft in bearings in the fan housing. The air or gas may enter from the side of the fan wheel, turn 90 degrees and accelerate due to centrifugal forces as it flows over the fan blades and exits the fan housing.

The rotor core and the stator core may have a laminated structure being made of electrical steel sheets. Axial air channels may be formed in the rotor core and in the stator core by punching into the steel sheets.

The invention is not limited to the examples described above but may vary within the scope of the claims.

## Claims

1. An electric machine comprises
a shaft (10),
a rotor (100) being supported on the shaft (10),
a stator (200) surrounding the rotor (100),
a frame (300) surrounding the stator (200),
end plates (325, 335) being attached to opposite axial ends of the frame (300), the shaft (10) being supported with a first bearing (20) on a first end plate (325) at a drive end (D) of the electric machine and with a second bearing (30) on a second end plate (335) at a non-drive end (N) of the electric machine,
at least one fan (40, 50) being supported on the shaft (10) at the non-drive end (N) of the electric machine,
**characterized in that**
two circular suction plates (410, 420) with an outer diameter (D1) and a mutual axial distance (L1) are arranged around the shaft (10) outside the frame (300), a first suction plate (410) facing towards the drive end (D) is fixed and a second suction plate (420) facing towards the non-drive end (N) rotates with the shaft (10), the outer diameter (D1) and the mutual axial distance (L1) of the two suction plates (410, 420) being determined so that an axial force produced by the suction between the two suction plates (410, 420) on the shaft (10) compensates the axial force produced by the at least one fan (40, 50) on the shaft (10).

2. An electric machine as claimed in claim 1, wherein the axial force produced by the at least one fan (40, 50) acts on the shaft (10) in a first direction and the axial force produced by the suction between the two suction plates (410, 420) acts on the shaft (10) in a second opposite direction.

3. An electric machine as claimed in claim 2, wherein the first direction is directed from the drive end (D) towards the non-drive end (N) and the second direction is directed from the non-drive end (N) towards the drive end (D).

4. An electric machine as claimed in any one of claims 1 to 3, wherein the suction plates (410, 420) are formed of planar circular plates.

5. An electric machine as claimed in claim 4, wherein the suction plates (410, 420) are parallel.

6. An electric machine as claimed in claims 1 or 2, wherein the first suction plate (410) is formed of a planar circular plate and the second suction plate (420) has the form of a truncated cone, a first, bigger bottom plane of the truncated cone being positioned closer to the first suction plate (410) compared to a second, smaller bottom plane of the truncated cone, the minimum axial distance (L1) between the suction plates (410, 420) being determined of the axial distance between the first bottom plane of the cone and the first suction plate (410).

7. An electric machine as claimed in any one of claims 1 to 6, wherein the fixed suction plate (410) is supported on a bearing housing (335) of the second radial bearing (30).

8. An electric machine as claimed in any one of claims 1 to 7, wherein a thickness (T1) of the suction plates (410, 420) is uniform throughout the suction plates (410, 420).

9. An electric machine as claimed in any one of claims 1 to 8, wherein the electric machine comprises two fans (40, 50), a first fan (40) of the two fans (40, 50) being supported on the shaft (10) within the frame (300) at the non-drive end (N) of the electric machine and a second fan (50) of the two fans (40, 50) being supported on the shaft (10) outside the frame (300) at the non-drive end (N) of the electric machine.

10. An electric machine as claimed in claim 9, wherein the two suction plates (410, 420) are positioned between the second bearing (30) and the second fan (50).
